# EUROPEAN PATENT APPLICATION

(11) **EP 3 932 723 A1**
(43) Date of publication of application: **05.01.2022**
(21) Application number: 21305897.7
(22) Date of filing: 30.06.2021
(51) Int. Cl.: B60L 3/00, B60L 7/26, B60L 15/20, B60T 8/172, B60W 20/00

(54) **IMPROVED BRAKING SYSTEM FOR AN AUTOMATIC DRIVING VEHICLE**

(30) Priority: 30.06.2020 IT 202000015766
(71) Applicant: IVECO FRANCE S.A.S., 69200 Vénissieux (FR)
(72) Inventor: CODRON, Stephane, 69008 Lyon (FR)
(74) Representative: Studio Torta S.p.A.

(57) **Abstract**

A vehicle (1) driven at least partially electrically and mobile on a plurality of wheels (4) comprising a brake control system (9), an electronic unit (11), and temperature sensor means for a brake unit (6) of the vehicle (1),
wherein the electronic unit (11) processes said temperature data from the brake unit (6) in order to control the brake control system (9) accordingly.

## Description

### CROSS-REFERENCE TO RELATED APPLICATIONS

This patent application claims priority from Italian patent application no. 102020000015766 filed on 30/06/2020.

### TECHNICAL FIELD

The present invention relates to a braking system for a vehicle with at least partially electric traction, in particular a braking system for an autonomous, electrically driven vehicle.

### STATE OF THE PRIOR ART

Vehicles driven at least partially electrically comprise one or more electric motors which transform the energy stored in a battery system into motor torque at the wheels to allow traction of the vehicle.

These vehicles generally comprise a mixed braking system, in which part of the braking torque is actively supplied by a braking system, such as an Electronic Brake System (EBS) or a "brake-by-wire" system, and another part of the braking torque can be passively supplied by activating the operation of the electric motors as generators to recharge the battery system. In fact, in this mode of operation, a passive inertial load is known to be generated on the wheels which have the tendency to brake, a phenomenon known as "regenerative braking".

However, depending on the temperature of the brakes, the braking distance can vary considerably. In fact, assuming a constant braking pressure applied to the brakes, in the case of low-temperature brake discs, a higher braking torque will only be achieved in the case of high-temperature discs. In fact, when the brakes are at a high temperature, they tend to form a fluid "film" that impairs braking.

This situation has a considerable influence if the vehicle is driven by a driver who will notice a different braking effect under certain driving conditions. However, this situation is essential for the correct management of the braking of autonomous vehicles and for ensuring the same braking distance.

In fact, normally, as a function of a braking distance predetermined by an electronic unit which manages the autonomous driving vehicle, the active and passive braking torque is split to obtain this braking distance.

However, due to the above-described phenomenon related to the temperature of the brake discs, this distance might not be correctly observed in the event of braking at high temperatures or may lead to abrupt decelerations which may damage the passengers inside the vehicle.

It is therefore necessary to improve the braking systems of vehicles with at least partially electric traction.

The object of the invention is to solve the above-mentioned drawbacks in a cost-effective and optimized way.

### SUMMARY OF THE INVENTION

The above-mentioned object is achieved by means of a vehicle comprising a brake system and a brake control method as claimed in the attached dependent claims.

Preferred embodiments of the invention are carried out according to the claims dependent on or related to the above-mentioned independent claims.

### BRIEF DESCRIPTION OF THE DRAWINGS

Further features and advantages of the invention will become more apparent from the following description thereof, given by way of illustrative, non-limiting example, with reference to the attached drawings, wherein:
- Figure 1 is a perspective view showing a vehicle comprising a braking system according to the invention;
- Figure 2 is a schematic bottom view of the vehicle in Figure 1; and
- Figure 3 is a schematic sectional view of a portion of the vehicle in Figure 1.

### DETAILED DESCRIPTION OF THE INVENTION

The following description refers to an autonomous driving, fully electric-traction minibus, for greater clarity and in no way limiting, since the following description is suitable to be applied to other types of autonomous driving road vehicles comprising an at least partially electric traction.

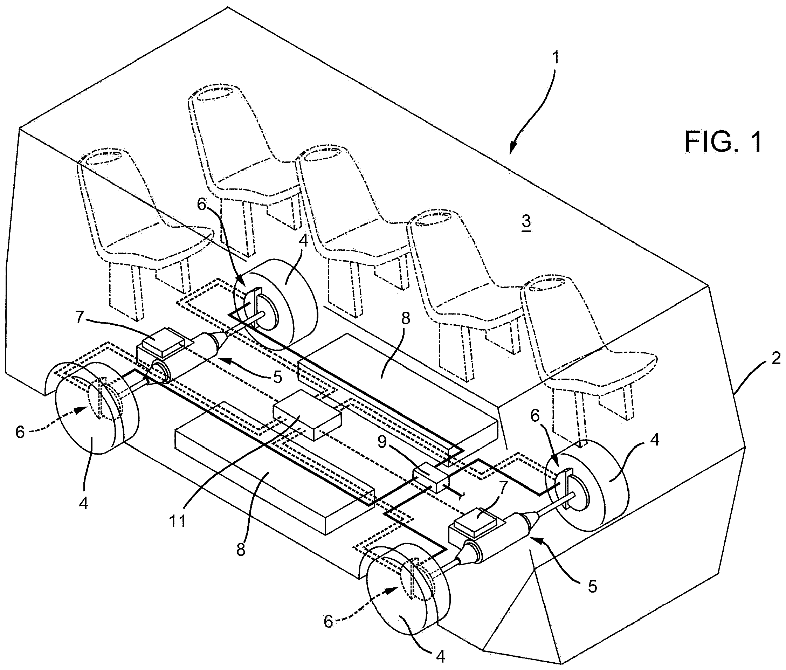

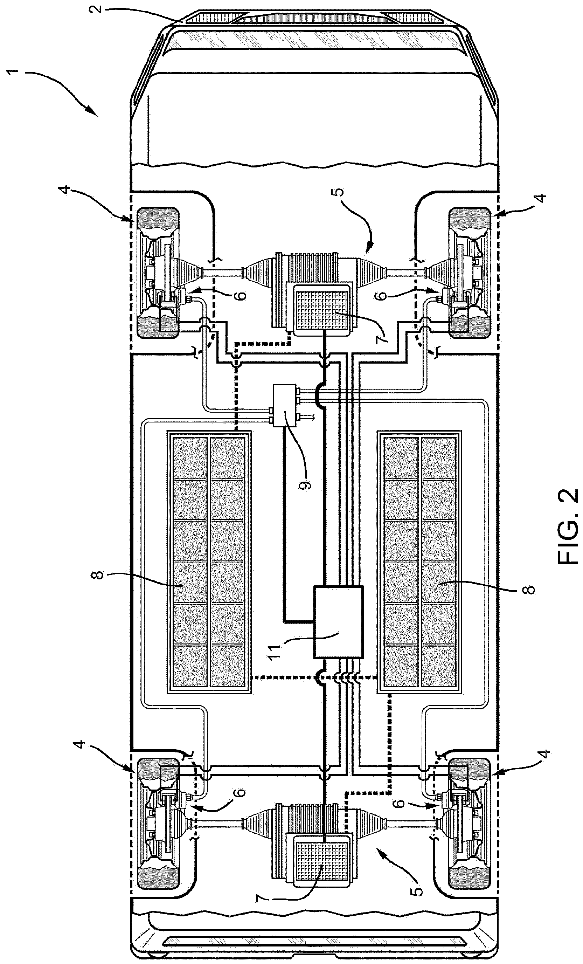

Figures 1 and 2 illustrate an electric, autonomous driving minibus 1 comprising a plurality of walls 2 defining an internal space 3 accessible to passengers.

The minibus 1 can move on the ground thanks to a plurality of wheels 4 carried by axles 5 supported in a known way, for example by means of known, not shown, suspension systems.

Each wheel 4 is equipped with a brake unit 6 configured to allow the braking of the wheel 4 and connected to a brake control system 9, as described in greater detail below.

According to the embodiment shown, each axle 5 comprises an electric machine 7. Each electric machine 7 is also electrically connected to a battery system 8 configured to store a sufficient amount of electrical energy to allow the operation of the minibus 1.

In particular, in the described embodiment, the battery system 8 comprises two battery packs connected electrically to each other, and both to each of the electric machines 7.

Each electric machine 7, as known, is configured to operate as a motor, by only using the electrical energy stored in the battery system 8 for providing motor torque to the wheels 4, and to operate as a generator, thus by "absorbing" torque at the wheels 4 for generating electrical energy to recharge the battery packs of the battery system 8.

The minibus 8 further comprises an electronic unit 11 provided with processing means configured to process the data detected by the sensor means for controlling each electric machine 7. Advantageously, this electronic unit 11 is the ECU of the vehicle 1.

The electronic unit 11 is also electronically connected to the brake control system 9 to send a control signal thereto, as described below.

The brake control system 9 can be of any type provided it is electrically controlled, for example a brake-by-wire or EBS system, and provided it is electrically connected to the electronic unit 11 from which it receives a control signal for controlling the brake units 6 accordingly.

The brake control system 9 is therefore operatively connected to each brake unit 6 so as to control the braking torque exerted as a function of the control signal received from the electronic unit 11. Advantageously, the brake control system 9 is of the pneumatic type.

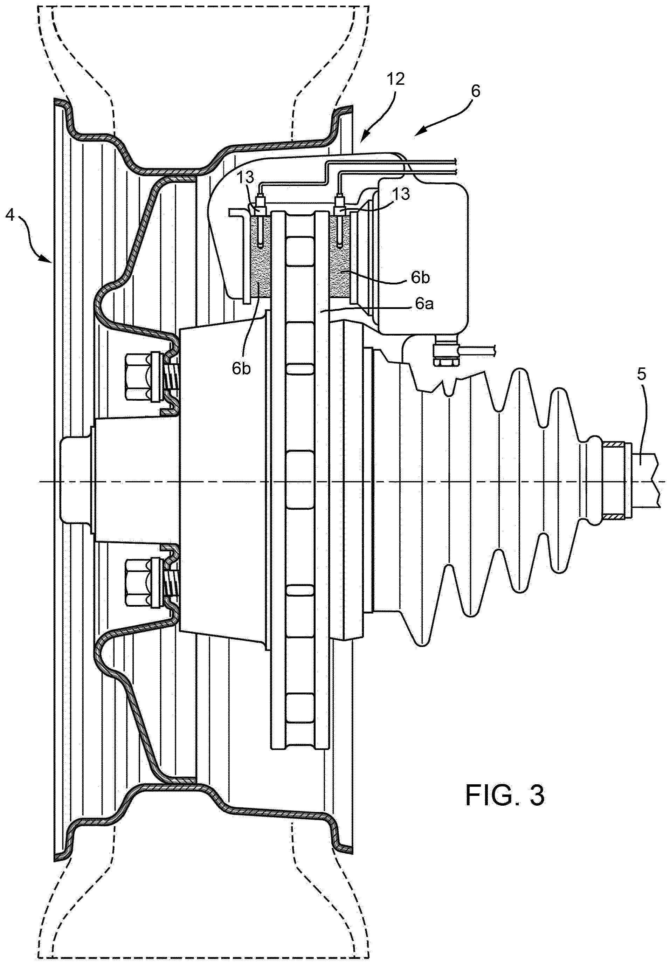

According to the invention, each brake unit 9 comprises temperature sensor means 12, shown in Figure 3, configured to detect the temperature of the functional elements of the brake unit 6. In particular, the temperature sensor means 12 comprise a thermocouple 13 located between friction elements of the brake unit 6.

According to the described embodiment, the brake unit 6 is a disc brake comprising a disc 6a carried by the wheel 4 and a pair of pads 6b carried by the chassis of the minibus 1 and configured to interact in contact under the action of an actuating force against the disc 6a to generate the braking torque. As a result, the thermocouple 13 is located in the pads 6b.

As is known, the pads 6b are actuated by the brake control system 9; in the case described herein, by a pressure of a pneumatic signal proportional to the signal received from the electronic unit 11.

The electronic unit 11 is connected, electronically through a wire or electromagnetically, to the temperature sensor means 12 so as to acquire data relating to the temperature of the functional elements of the brake unit 6 and so as to control the operation of the brake control system 9 and of the electric machine 7 on the basis of these temperature data, of the data relating to the dynamic condition of the vehicle, of the required braking distance, and of the operation of the electric machine 7. That is, the electronic unit 11 splits the braking torque between the brake control system 9 and the electric machine 7 as a function of the detected temperature.

The operation of a vehicle 1 comprising a braking system as described above according to the invention is as follows.

In a standard operating condition, in which the temperature detected by the temperature sensor means 12 is within a predetermined range, for example between 200°C and 700°C, the electronic unit 11 receives or estimates a braking setpoint to allow the vehicle to brake within a predetermined distance and, depending on the operating conditions of the vehicle 1, calculates the braking acceleration to be imposed on the vehicle 1 and hence a braking torque to be applied to the wheels 4 in order to obtain this braking acceleration.

In particular, when the braking acceleration is lower than a predetermined value, for example 2 m/s², this braking torque is supplied by the electric machines 7 alone which, by operating as generators, apply a braking torque to the wheels 4. When the braking acceleration is greater than this predetermined value, then the brake control system 9 is controlled by the electronic unit 11 in order to supply additional braking torque through each brake unit 6.

In a low temperature condition detected by the temperature sensor means 12, for example below 200°C, the electronic unit 11 controls the brake control system 9 considering that the braking power of the latter is higher, and therefore it is sufficient to apply a lower torque to obtain the same braking torque as that normally supplied at higher temperatures.

In a high temperature condition detected by the temperature sensor means 12, for example above 700°C, the electronic unit 11 controls the brake control system 9 considering that the braking power of the latter is lower, and therefore it will be necessary to communicate a greater torque in order to obtain the same braking torque as that normally supplied at lower temperatures.

Considering the above, the present invention also relates to a method for controlling a braking system of an at least partially electric traction vehicle, comprising the steps of:
- detecting a temperature of the functional elements of the brake unit 6 of the vehicle 1;
- receiving or processing a braking setpoint for the vehicle 1;
- estimating a braking torque value to be supplied to the wheels 4 of the vehicle 1 as a function of the detected temperature, the braking setpoint and the dynamic conditions of the vehicle 1;
- splitting the estimated braking torque between a braking torque supplied by at least one electric machine 7 of the vehicle 1 and a braking torque supplied by the brake units 6;
- controlling the brake control system 9 and the electric machine 7 accordingly, in order to supply the torques calculated in the previous step.

The advantages of a vehicle 1 comprising a braking system according to the present invention are clear from the foregoing.

The presence of the temperature sensor means 12 allows the temperature of a braking unit 6 to be known and therefore allows the electronic unit 11 to change the value of the control signal transmitted to the brake control system 9, which will provide a consequent braking torque to the wheels 4 of the vehicle 1.

Therefore, abrupt decelerations are avoided, and the braking distance of the vehicle is observed, thereby the safety of the automatic driving vehicle is increased.

Moreover, the proposed braking system is particularly compact and cost-effective and can also be used on existing vehicles by modifying the brake unit 6 by adding the temperature sensor means 12.

Lastly, it is clear that modifications and variations may be made to the vehicle 1 comprising a braking system according to the present invention, without however departing from the scope of protection defined by the claims.

In particular, it is clear that the brake unit 6 and the temperature sensor means 12 can be of any type.

Moreover, it is possible for the electronic unit 11 to interpolate the torque values in different ways according to the type, number, and arrangement of the electric machines 7 and to the batteries 8 present on the vehicle 1. Furthermore, it is clear that the system can be applied to a remotely driven or standard driven vehicle, that is, the braking setpoint is received remotely via telecommunication or via a command from a driver.

## Claims

1. An automatic driving vehicle (1) with at least partially electric traction and mobile on a plurality of wheels (4), said vehicle (1) comprising at least one electric machine (7) and a battery system (8), said electric machine (7) being configured to operate as a motor, using the energy stored in said battery system (8) to provide motor torque to at least one of said wheels (4) and to function as a generator by absorbing torque at at least one of said wheels (4) for generating energy which can be stored in said battery system (8),
said vehicle (1) comprising a brake control system (9) and an electronic unit (11), said brake control system (9) being configured to control a respective brake unit (6) at each wheel (4) as a function of a control signal received by said electronic unit (11),
said electronic unit (11) being configured to drive said vehicle automatically on the basis of data acquired by a plurality of sensor means of said vehicle,
said electronic unit (11) comprising processing means configured to prepare data relating to a braking setpoint proportional to the dynamic conditions of said vehicle (1) for controlling said brake control system (9) and said electric machine (7) so as to distribute the braking torque to the wheels (4),
said vehicle (1) comprising temperature sensor means (12) configured to detect a temperature of the functional elements of said brake units (6),
said electronic unit (11) being electronically connected to said temperature sensor means (12) for detecting the data acquired by the latter, said electronic unit (11) also producing said control data as a consequence of said brake control system (9).

2. The vehicle according to claim 1, wherein said temperature sensor means (12) comprises a thermocouple (13) .

3. The vehicle according to one of claims 1 or 2, wherein said brake unit (6) comprises friction elements, said temperature sensor means (12) being configured to detect the temperature of said friction elements.

4. The vehicle according to one of the preceding claims, wherein said brake unit (6) comprises a disc brake or a drum brake.

5. The vehicle according to one of the preceding claims, wherein said brake control system (9) is a pneumatic control system.

6. The vehicle according to one of the preceding claims, wherein said brake control system (9) is an EBS or brake-by-wire system.

7. A method for controlling a braking system of a vehicle driven automatically and at least partially electrically, comprising the phases of:
- detection of a temperature of the functional elements of the brake unit (6) of said vehicle (1);
- reception or preparation of a braking setpoint for said vehicle (1);
- estimation of a braking torque value to be supplied to the wheels (4) of said vehicle (1) as a function of said detected temperature, of said braking setpoint and of the dynamic conditions of said vehicle (1);
- sharing of the estimated braking torque between a braking torque supplied by at least one electric machine (7) of said vehicle (1) and a braking torque supplied by the brake units (6);
- consequent control of the management system of said braking (9) and of the electric machine (7) to supply the torques calculated in the previous phase.
